Europäisches Patentamt

European Patent Office

Office européen des brevets

(11) Numéro de publication: **0 115 736**
**A1**

## (12) DEMANDE DE BREVET EUROPEEN

(21) Numéro de dépôt: 83440001.2

(22) Date de dépôt: 07.01.83

(51) Int. Cl.³: **G 07 C 5/08**, G 01 P 21/02

(30) Priorité: 10.11.82 FR 8219186

(71) Demandeur: **NOUVELLE SOCIETE ANONYME DES ETS André CAUCHOIS, 150 rue de Marquillies, F-59018 Lille (FR)**

(43) Date de publication de la demande: 15.08.84
**Bulletin 84/33**

(72) Inventeur: **Fourez, Eric, 64 Carrière Delmarle, F-59150 Wattrelos (Nord) (FR)**

(84) Etats contractants désignés: **AT BE CH DE FR GB IT LI LU NL SE**

(74) Mandataire: **Lepage, Jean-Pierre, c/o BUGNION PROPRIETE INDUSTRIELLE SARL 23/25, rue Nicolas Leblanc, F-59011 Lille Cédex 1 (Nord) (FR)**

(54) **Automate d'essai de chronotachygraphe.**

(57) L'invention est relative à un automate d'essai de chrono-tachygraphe.

Selon l'invention, l'automate (1) comprend un dispositif (5) d'entraînement du chronotachygraphe (2):

– une base de temps (7) composée d'une horloge (8) et d'un compteur de cycles programmables (9),

– une mémoire (10) dans laquelle sont enregistrées les consignes de vitesse d'essai (11) et d'occupation (12) correspondantes,

– des moyens (16) de commande du commutateur d'occupation (3) placés sur le chronotachygraphe (2),

– un organe (15) de commande du dispositif motorisé (5) d'entraînement du flexible (4) piloté par les consignes de vitesse (11) enregistrées en mémoire (10).

L'invention trouvera tout particulièrement son application pour effectuer les vérifications périodiques de chronotachygraphes placés généralement sur les véhicules à usage industriel.

- 1 -                                    **0115736**

L'invention est relative à un automate d'essai de chronotachygraphe destiné à contrôler la précision et le bon fonctionnement de
ces appareils enregistreurs.

Les chronotachygraphes sont des appareils indicateurs et enregistreurs de vitesse, kilométrage, temps, généralement placés sur
des véhicules industriels. Ils permettent non seulement de donner des
indications instantanées au chauffeur mais également de vérifier postérieurement leur emploi du temps et les déplacements du véhicule.

Il est nécessaire, sur le plan technique, mais également sur
le plan légal d'effectuer des vérifications périodiques du bon fonctionnement et de la précision des chronotachygraphes. Actuellement, cette
vérification est assurée manuellement. L'opérateur dispose d'un banc
d'essai motorisé et d'un chronomètre. Le banc d'essai motorisé est constitué par un dispositif d'entraînement d'un flexible qui est raccordé
au chronotachygraphe de façon à pouvoir l'entraîner mécaniquement. Le
banc comprend, en outre, un indicateur propre de vitesse. L'opérateur
règle la vitesse du banc d'essai pour que le compteur du banc indique
la valeur de la vitesse normalisée d'essai qu'il est nécessaire d'effectuer, ceci quelle que soit la vitesse indiquée par le chronotachygraphe. La durée de l'essai est contrôlée à l'aide du chronomètre et toute
dérive de la vitesse du banc d'essai est corrigée de façon à ce que la
vitesse indiquée par le compteur du banc corresponde à la valeur de la
vitesse d'essai normalisée. En FRANCE, la législation impose que, chaque
séquence d'essai de vitesse dure un minimum de trois minutes et, il
est nécessaire d'essayer quatre vitesses différentes avec une période
de repos intermédiaire soit au total quinze minutes d'essai.

Etant donné les fréquentes modifications des réglages durant
un cycle d'essai, une vérification périodique nécessite la présence
constante d'un opérateur et, par conséquent, le coût de revient est
relativement élevé d'autant plus qu'en raison de la complexité des réglages, il est à craindre que l'opérateur commette certaines erreurs
et que, par conséquent, il soit nécessaire de recommencer plusieurs
fois les opérations.

Par ailleurs, les bancs d'essai actuels présentent des possibilités de correction de la vitesse, qui, s'ils sont mal utilisés, peuvent aboutir à fausser les résultats ou même, dans certains cas, cette
possibilité de réglage peut être utilisée par des gens mal intentionnés
pour obtenir un bon disque d'essai avec un mauvais chronotachygraphe ou vice versa.

Par conséquent, les bancs d'essai actuels ne sont pas satisfaisants d'une part sur le plan de la main d'oeuvre car ils nécessitent l'utilisation de personnels très qualifiés en raison de la complexité des séquences à effectuer et, d'autre part car ils nécessitent la présence permanente de ce personnel. Par ailleurs, puisqu'ils présentent des possibilités d'ajustement de la vitesse de sortie du banc s'ils sont mal utilisés, ils peuvent aboutir à de mauvais résultats.

Le but de la présente invention est de présenter un automate d'essai de chronotachygraphe qui ne nécessite plus aucune intervention extérieure durant l'essai si ce n'est que pour la mise en marche de l'automate. Par conséquent, les temps d'essai seront scrupuleusement respectés et l'opérateur pourra vaquer à d'autres occupations durant le cycle d'essai.

Un autre but de la présente invention est de proposer un automate d'essai de chronotachygraphe inviolable, c'est-à-dire que le programme de fonctionnement de l'automate qui correspond à la vérification périodique est écrit par le constructeur et ensuite n'est plus accessible par l'utilisateur. Par conséquent, les différentes compensations de dérive n'ont plus à être effectuées et l'utilisateur ne peut plus intervenir sur l'automate de quelque façon que ce soit pour modifier son fonctionnement et ainsi risquer d'entraîner une erreur involontaire ou volontaire.

D'autres buts et avantages de la présente invention apparaîtront au cours de la description qui va suivre qui n'est cependant pas donnée à titre limitatif.

L'automate d'essai de chronotachygraphe destiné à contrôler la précision et le bon fonctionnement des appareils enregistreurs de vitesse, kilométrage, temps, placés sur véhicules, ainsi que la catégorie d'occupation du chauffeur, celle-ci pouvant être sélectionnée parmi les catégories suivantes : repos, présence active, présence passive ou conduite, le choix se faisant par l'intermédiaire d'un commutateur placé sur le chronotachygraphe, est caractérisé par le fait qu'il comprend :

- un dispositif d'entraînement du chronotachygraphe,

- une base de temps composée d'une horloge et d'un compteur de cycle programmable,

- une mémoire dans laquelle sont enregistrées les consignes de vitesses d'essai et d'occupations correspondantes,

- des moyens motorisés de commande du commutateur d'occupation placé sur le chronotachygraphe,

- un organe de commande du dispositif d'entraînement du chronotachygraphe piloté par les consignes de vitesse enregistrées en mémoire.

L'invention sera mieux comprise si l'on se réfère à la description ci-dessous ainsi qu'aux dessins en annexe qui en font partie intégrante.

La figure 1 schématise la structure interne de l'automate programmable de l'invention.

La figure 2 schématise un diagramme d'essai de chronotachygraphe avec le contenu de la mémoire correspondante.

Les chronotachygraphes sont des appareils munis de cadrans qui indiquent l'heure, la vitesse ainsi que le kilométrage et autres du véhicule sur lequel ils sont placés. En outre, les chronotachygraphes sont équipés d'enregistreurs des informations précédentes sur un disque, l'enregistrement se faisant généralement à l'aide d'un stylet graveur, ce qui permet de connaître postérieurement les déplacements et les vitesses atteintes par le véhicule. En outre, l'appareil enregistreur indique la catégorie d'occupation du chauffeur, celle-ci pouvant être sélectionnée parmi les catégories suivantes : repos, présence passive, présence active ou conduite. Le choix de la catégorie est effectué par le chauffeur qui agit sur un commutateur placé sur le chronotachygraphe. La vérification de l'emploi du temps du chauffeur permet de contrôler qu'il respecte bien notamment les temps de conduite et temps de présence maximum autorisés légalement.

Actuellement, la plupart des chronotachygraphes sont à entraînement mécanique par l'intermédiaire d'un flexible.

L'essai d'un chronotachygraphe demande d'entraîner le chronotachygraphe successivement à différentes vitesses prédéterminées pendant des temps donnés. En outre, il est nécessaire de modifier la position du commutateur d'occupation du chauffeur durant le cycle d'essai pour vérifier les écritures sur les différentes pistes du disque.

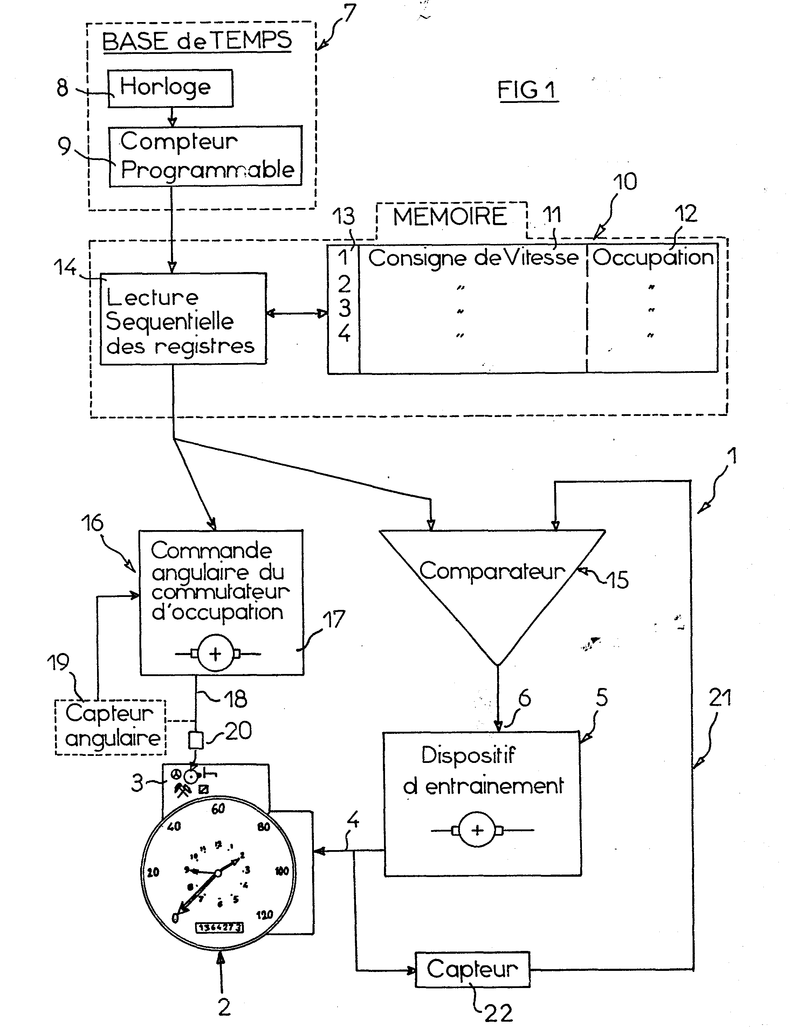

La figure 1 schématise l'automate 1 d'essai du chronotachygraphe 2. Ce chronotachygraphe comprend un cadran sur lequel est indiqué l'heure, le kilométrage et la vitesse et éventuellement d'autres informations. Ce chronotachygraphe comprend en outre, dans sa partie interne, un enregistreur des informations précédentes sur un disque avec en outre une indication de la catégorie d'occupation du chauffeur qui est sélectionnée

0115736

par l'intermédiaire d'un bouton 3 d'entraînement d'un commutateur, ce bouton 3 étant placé sur la partie frontale du chronotachygraphe 2.
Ce chronotachygraphe 2 est entraîné par l'intermédiaire d'une transmission électrique ou mécanique 4 qui est relié à un dispositif d'entraînement 5. Ce dispositif d'entraînement 5 comprend, dans sa partie interne, un moteur dont la vitesse est commandée par des informations qu'il reçoit à son entrée 6.

L'automate d'essai comprend, en outre, une base de temps 7 composée d'une horloge 8 suivie d'un compteur programmable 9. L'horloge, généralement de fréquence fixe, envoie régulièrement des impulsions en direction du compteur programmable qui, lui-même, engendre des impulsions espacées dans le temps selon son programme interne.

L'automate d'essai 1 comprend en outre une mémoire 10 dans laquelle sont enregistrées les consignes de vitesse 11 et d'occupation correspondantes 12. La mémoire 10 comprend une série de registres qui ont été numérotés par la référence 13 pour une meilleure compréhension, chaque registre contenant une consigne de vitesse et d'occupation.
La mémoire 10 comprend, en outre, dans sa structure interne, un dispositif 14 de lecture séquentielle des registres. Ce dispositif de lecture 14 est commandé à partir des impulsions qu'il reçoit du compteur programmable 9. A chaque impulsion que reçoit le dispositif de lecture 14, il vient lire le contenu du registre suivant et sort le contenu des registres. Sur le plan de la réalisation, il est possible d'envisager principalement deux types de mémoire. D'une part, il s'agit des mémoires purement logiques avec un stockage digital des informations ou alors, d'une mémoire fixe dans laquelle le dispositif de lecture séquentielle comprend des circuits logiques alors que, les consignes de vitesse et d'occupation sont stockées sous forme analogique, par exemple, positionnement de potentiomètres.

Les informations issues de la mémoire 10 sont dirigées pour une part vers un comparateur 15 notamment en ce qui concerne les informations de consigne de vitesse. Cet organe de commande 15 sera, en quelque sorte, un adaptateur qui permettra de rendre intelligible pour le dispositif d'entraînement 5 le contenu de la mémoire et plus particulièrement les consignes de vitesse 11. En effet, à supposer que la mémoire soit entièrement construite sous forme logique, alors que le dispositif d'entraînement nécessite une commande en tension par son entrée 6, il sera nécessaire de placer un organe de commande 15 intermédiaire qui sera un convertisseur digital analogique.

- 5 -                           0115736

En ce qui concerne les consignes d'occupation 12 contenues dans la mémoire 10, celles-ci seront dirigées en sortie du dispositif de lecture séquentielle 14 vers des moyens motorisés 16 de commande du commutateur 3 d'occupation placé sur le chronotachygraphe 2.

Par exemple, les moyens 16 motorisés de commande du commutateur 3 d'occupation se présenteront sous la forme d'une commande angulaire du commutateur d'occupation 17 qui comprend notamment un moteur suivi d'un réducteur dont la sortie 18 se fait sur un flexible équipé de moyens de fixation au bouton 3 de manipulation du commutateur. Les moyens de fixation pouvant, notamment, se présenter sous la forme d'un capuchon élastique que l'on vient emboîter sur le bouton 3 de façon à pouvoir l'entraîner en rotation. En outre, un capteur angulaire 19 est placé en sortie 18 de la commande angulaire 17 de façon à réagir sur cette dernière pour obtenir un positionnement correct du bouton 3.

Etant donné qu'il existe plusieurs modèles de chronotachygraphes, l'automate d'essai de la présente invention pourra présenter en parallèle plusieurs commandes angulaires, chacune d'entre elles étant adaptée à un type de chronotachygraphe. Il suffira alors de brancher le flexible de la commande angulaire adéquate avec le modèle de chronotachygraphe à tester.

En particulier, il existe des chronotachygraphes dits automatiques c'est-à-dire que la commutation de la position conduite ne demande aucune intervention extérieure. Il existe également des chronotachygraphes pour deux chauffeurs, toutefois, le commutateur de catégorie d'occupation du second chauffeur est par construction démuni de la position conduite. Pour pouvoir utiliser un même programme mémoire quel que soit le type de chronotachygraphe à tester, il sera avantageux de disposer sur le flexible 18 en sortie de commande angulaire d'un limiteur de couple 20 qui se débrayera, par exemple, lorsque la commande angulaire sera actionnée sur conduite alors que, le chronotachygraphe n'est pas équipé d'une telle position de commutateur, dans ce cas, le débrayage du limiteur de couple 20 permettra de ne pas endommager le bouton 3 qui se trouve en bout de course.

De plus, l'avantage du limiteur de couple 20 est de pouvoir initialiser le chronotachygraphe 2. En effet, lorsque ce dernier est placé dans l'automate d'essai, la position de son bouton de commutation 3 peut être quelconque. La première solution consiste à demander à l'opérateur de toujours placer ce bouton avant d'effectuer la série de tests

0115736

dans une position prédéterminé. La seconde solution, plus avantageuse car elle ne nécessite aucune intervention extérieure, consiste lors de la mise en marche de l'automate d'essai 1 de commander la commande angulaire du commutateur d'occupation de telle sorte qu'elle ramène le bouton 3 en bout de course dans un sens ou dans l'autre, pour cela, il suffit d'actionner son flexible de sortie 18 dans un sens qui sera défini et toujours le même. Le bouton 3 sera ramené dans le sens choisi, et, lorsqu'il arrivera en bout de course, le limiteur de couple se débrayera et quelle que fût sa position initiale, le bouton 3 sera toujours dans une position prédéterminée au départ de chaque cycle par le biais de cette manoeuvre initiale.

L'automate d'essai 1 décrit précédemment peut être amélioré en lui adjoignant une boucle de contre-réaction 21. Cette bouche de contre-réaction permet de compenser toute dérive éventuelle du dispositif d'entraînement 5. En effet, il est à craindre que, pour une même information en entrée 6 du dispositif d'entraînement 5, la vitesse de sortie du dispositif d'entraînement 5 puisse être influencée par divers facteurs tels que notamment la température. Cette éventualité a pour conséquence de fausser la mesure. A ce stade, il peut être envisagé d'effectuer, par exemple, une correction manuelle de la dérive pour ramener la vitesse du dispositif d'entraînement égale à la vitesse de consigne. Pour cela le dispositif d'entraînement dispose d'un afficheur de vitesse précis.

La seconde solution, beaucoup plus avantageuse, qui est réalisée avec la boucle de contre-réaction 21 consiste à effectuer des corrections automatiques de la dérive.

Pour cela, l'organe de commande 15 prend la forme d'un comparateur 15 qui reçoit, d'une part, les informations issues du lecteur séquentiel de registre 14, et d'autre part, les informations d'un capteur 22 qui est placé directement sur les moyens d'entraînement du chronotachygraphe 2. Ce capteur 22 mesure donc la vitesse réelle de sortie du dispositif d'entraînement 5. Le comparateur 15 peut donc analyser la vitesse théorique provenant de la mémoire et la vitesse réelle détectée par le capteur 22, en cas d'écart entre les deux, il modifie sa valeur de sortie pour réajuster la vitesse de sortie du dispositif d'entraînement 5 de telle sorte qu'elle corresponde exactement à la valeur de consigne imposée.

Avec une telle conception de l'automate d'essai, l'utilisateur ne peut absolument plus influer sur les résultats de l'essai puisque les conditions de l'essai sont strictement imposées par le contenu de la mémoire 10. Il pourra, par exemple, être envisagé de placer la mémoire 10 et le capteur 22, notamment, sous scellés afin de garantir l'appareil de toute falcification de ses conditions de fonctionnement.

Par ailleurs, on pourra également adjoindre un avertisseur qui pourra, notamment, être lumineux ou sonore à l'automate d'essai afin d'avertir l'opérateur en fin d'essai ou à chaque séquence. Le déclenchement du signal avertisseur pouvant être opéré notamment à partir de la mémoire en prévoyant, dans les pas du programme, la mise en fonctionnement momentané de l'alarme.

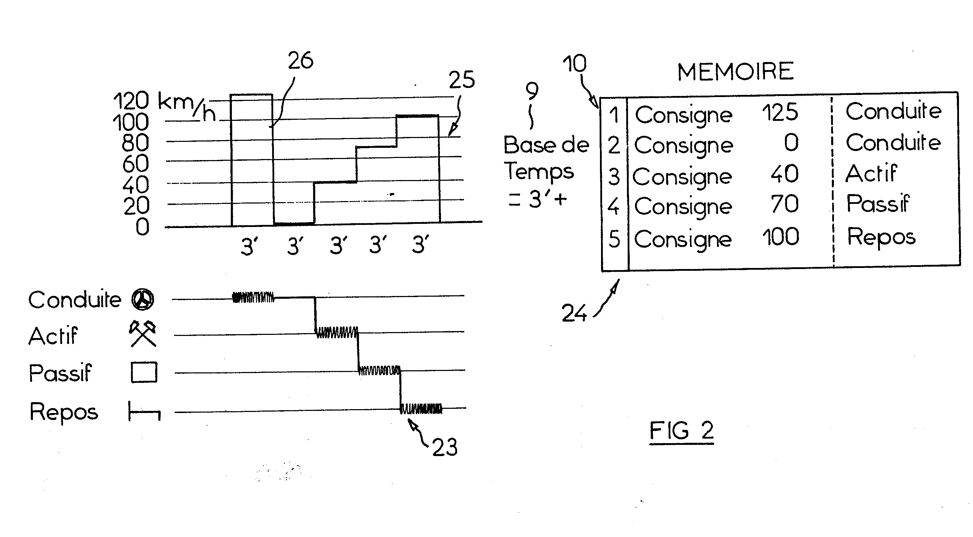

La figure 2 schématise un test de vérification périodique avec un diagramme d'essai 23 et la programmation correspondante 24. Le diagramme 23 illustre les différentes pistes présentes sur un disque enregistreur de chronotachygraphe. Le cycle d'essai représenté correspond à une vitesse de 125 km/h pendant 3 minutes en position d'occupation conduite, 3 minutes d'arrêt en position conduite, 3 minutes à 40 km/h en position d'occupation en présence active, 3 minutes à 70 km/h en présence passive et 3 minutes à 100 km/h en position repos.

Le diagramme 23 illustre, dans sa partie supérieure, la piste des vitesses 25 où l'on peut voir la courbe 26 en escalier de l'essai. La partie inférieure du diagramme 27 illustre les différentes catégories d'occupation du chauffeur sur les pistes correspondantes.

Pour réaliser cet essai, l'automate d'essai devra être programmé de telle sorte que sa base de temps et, en particulier, son compteur programmable 9 soit réglé pour sortir une impulsion toutes les 3 minutes. Ensuite, le contenu de sa mémoire 10 devra présenter cinq pas de programme avec les différentes étapes de vitesse et de catégories d'occupation correspondantes telles qu'illustrées sur la figure.

Il est possible d'utiliser une période de base de temps sous multiple de la durée d'une séquence d'essai, auquel cas il est nécessaire de lire les mêmes consignes dans plusieurs registres consécutifs pour obtenir le même ordre pendant la durée d'une séquence du cycle.

Il est bien évident que des programmes d'essai beaucoup plus complexes pourraient être mis en oeuvre avec une grande simplicité en utilisant l'automate d'essai de l'invention, puisqu'il suffit de multiplier le nombre de pas de programmes en mémoire pour modifier l'essai réalisé.

Dans le cas où il serait nécessaire d'envisager, sur un même automate d'essai plusieurs types de programmes, on conçoit, dans ce cas, de disposer la mémoire 10 sur, par exemple, une cartouche enfichable, il suffit, dans ce cas, de choisir la cartouche correspondant au programme souhaité sans avoir à effectuer de manoeuvres ni sur l'automate ni sur la cartouche.

D'autres mises en oeuvre de la présente invention auraient pu être envisagées sans pour autant sortir du cadre de la présente invention.

L'automate d'essai de la présente invention est également bien adapté aux chronotachygraphes destinés à l'enregistrement simultané de plusieurs disques correspondant à plusieurs chauffés. Il suffit en effet de manoeuvrer à l'aide des moyens motorisés 16 les différents commutateurs de catégories d'occupation en parallèle pour réaliser un cycle d'essai.

0115736

REVENDICATIONS

1. Automate d'essai de chronotachygraphe destiné à contrôler la précision et le bon fonctionnement des appareils enregistreurs de vitesse, kilométrage, temps placés sur véhicules, ainsi que la catégorie d'occupation du ou des chauffeurs, le choix de cette dernière se faisant par l'intermédiaire d'un commutateur (3) placé sur le chronotachygraphe (2), caractérisé par le fait qu'il comprend un dispositif (5) d'entraînement du chronotachygraphe (2) :

- une base de temps (7) composée d'une horloge (8) et d'un compteur de cycles programmables (9),

- une mémoire (10) dans laquelle sont enregistrées les consignes de vitesse d'essai (11) et d'occupation (12) correspondantes,

- des moyens (16) de commande du commutateur (3) d'occupation placés sur le chronotachygraphe (2),

- un organe (15) de commande du dispositif (5) d'entraînement du chronotachygraphe (4) piloté par les consignes de vitesse (11) enregistrées en mémoire (10).

2. Automate d'essai de chronotachygraphe selon la revendication 1, caractérisé par le fait qu'un capteur (22) est disposé directement sur les moyens d'entraînement du chronotachygraphe (2) et qu'il est relié à un comparateur (15) formant une boucle de contre-réaction (21) qui agit sur le dispositif d'entraînement (5) du chronotachygraphe pour corriger tout écart de vitesse réelle par rapport à la vitesse de consigne.

3. Automate d'essai de chronotachygraphe selon la revendication 2, caractérisé par le fait que l'organe de commande (15) est un ampli différentiel ou un comparateur digital dont les entrées sont reliées à la mémoire (10) de consigne des vitesses (11) et au capteur (22) de contre-réaction.

4. Automate d'essai de chronotachygraphe selon la revendication 1, caractérisé par le fait que les moyens (16) de commande du commutateur (3) d'occupation se présentent sous la forme d'un moteur suivi d'un réducteur dont la sortie se fait sur flexible (18) équipé de moyens de fixation au bouton (3) de manipulation du commutateur.

5. Automate d'essai de chronotachygraphe selon la revendication 4, caractérisé par le fait qu'un capteur angulaire (19) est placé sur le mécanisme d'entraînement du commutateur (3) d'occupation.

6. Automate d'essai de chronotachygraphe selon la revendica-

0115736

- 10 -

tion 4, caractérisé par le fait qu'un limiteur de couple (20) est placé sur le flexible (18) d'entraînement du bouton (3) du commutateur d'occupation.

7. Automate d'essai de chronotachygraphe selon la revendication 1, caractérisé par le fait que plusieurs moyens (16) de commande de commutateur sont disposés en parallèle pour s'adapter aux différents modèles de chronotachygraphe.

8. Automate d'essai de chronotachygrape selon la revendication 2, caractérisé par le fait que le boîtier qui contient la mémoire (10) de consigne des vitesses et celui qui contient le capteur (22) de contre-réaction peuvent être fermés et scellés.

9. Automate d'essai de chronotrachygraphe selon la revendication 1, caractérisé par le fait que la mémoire (10) peut être placée sur cartouches enfichables.

10. Automate d'essai de chronotachygraphe selon la revendication 1, caractérisé par le fait qu'un signal peut être engendré par l'automate (1) lorsque le cycle d'essai est terminé, ou à chaque séquence de cycle et fin de cycle.

0115736

FIG 1

BASE de TEMPS

8 — Horloge

9 — Compteur Programmable

7

13 — MEMOIRE — 11 — 10 — 12

14 — Lecture Sequentielle des registres

| | Consigne de Vitesse | Occupation |
|---|---|---|
| 1 | | |
| 2 | " | " |
| 3 | " | " |
| 4 | " | " |

16 — Commande angulaire du commutateur d'occupation — 17

19 — Capteur angulaire

18

20

3

2

Comparateur — 15

6

5

Dispositif d'entrainement

4

Capteur — 22

21

1364273

120 km/h
100
80
60
40
20
0

3' 3' 3' 3' 3'

26

25

Conduite
Actif
Passif
Repos

23

9
Base de
Temps
= 3' +

10

MEMOIRE

| 1 | Consigne | 125 | Conduite |
| 2 | Consigne | 0 | Conduite |
| 3 | Consigne | 40 | Actif |
| 4 | Consigne | 70 | Passif |
| 5 | Consigne | 100 | Repos |

24

FIG 2

Office européen
des brevets

**RAPPORT DE RECHERCHE EUROPEENNE**

0115736
Numéro de la demande

EP 83 44 0001

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A | US-A-4 070 901 (McDONALD)<br>* colonne 1, ligne 49 - colonne 2, ligne 45; colonne 4, ligne 33 - colonne 5, ligne 51; figures * | 1,2 | G 07 C 5/08<br>G 01 P 21/02 |
| | --- | | |
| A | DE-A-2 310 692 (KIENZLE)<br>* page 3, lignes 2-17; page 4, ligne 1 - page 5, ligne 11; page 6, ligne 11 - page 8, ligne 19; figures * | 1 | |
| | --- | | |
| A | FR-A-2 424 518 (SOC. MOTO METER)<br>* page 2, ligne 12 - page 3, ligne 40; figures 1-3 * | 1 | |
| | --- | | |
| A | FR-A-1 237 094 (KIENZLE)<br>* page 2, ligne 49 - page 2, ligne 100; figures 3-5 * | 1 | DOMAINES TECHNIQUES RECHERCHES (Int. Cl. ³) |
| | ----- | | G 07 B<br>G 07 C<br>G 01 P<br>G 01 C |

Le présent rapport de recherche a été établi pour toutes les revendications

| Lieu de la recherche | Date d'achèvement de la recherche | Examinateur |
|---|---|---|
| LA HAYE | 15-02-1984 | MEYL D. |